# EUROPÄISCHE PATENTSCHRIFT

(11) **EP 1 200 230 B1**
(45) Veröffentlichungstag und Bekanntmachung des Hinweises auf die Patenterteilung: **05.03.2003**
(21) Anmeldenummer: 00958359.2
(22) Anmeldetag: 02.08.2000
(51) Int. Cl.: B24B 45/00

(54) **SPANNEINRICHTUNG ZUM LÖSBAREN BEFESTIGEN EINES TEILS AUF EINER WELLE**
CLAMPING DEVICE FOR REMOVABLY FASTENING A PART UPON A SHAFT
DISPOSITIF DE SERRAGE POUR FIXER DE MANIERE LIBERABLE UNE PIECE SUR UN ARBRE

(30) Priorität: 07.08.1999 DE 19937436
(43) Veröffentlichungstag der Anmeldung: 02.05.2002
(73) Patentinhaber: INA-Schaeffler KG, 91074 Herzogenaurach (DE)
(72) Erfinder: SPERBER, Matthias, D-96193 Wachenroth (DE)
(86) Internationale Anmeldenummer: EP0007476
(87) Internationale Veröffentlichungsnummer: WO01010600

(56) Entgegenhaltungen:
- EP-A- 0 253 181
- WO-A-94/07042
- US-A- 4 697 966

## Beschreibung

Die vorliegende Erfindung betrifft eine Spanneinrichtung zum lösbaren Befestigen eines Teils auf einer Welle, wobei eine auf die Welle aufschraubbare Spannmutter zum Einspannen des Teils vorgesehen ist. (siehe z.B. US-A-4 697 966).

Aus EP 0 480 163 A1 beispielsweise ist eine Schnellspanneinrichtung, insbesondere zum Befestigen scheibenförmiger Werkzeuge an einer Antriebsspindel einer Handwerkzeugmaschine bekannt geworden. Die Schnellspanneinrichtung weist eine Mutter auf mit daran axial abgestützter Druckplatte und einen beide umgreifenden Handschraubteil, die dazwischen einen Ringraum bilden, in dem kugelförmige Wälzkörper enthalten sind, die an Flächen dieser drei Elemente anliegen und dort an Längsbahnen abrollen. Die Flächen des Handschraubteils sind symmetrisch zueinander, so daß sich dort etwa achsparallele Berührungspunkte ergeben, während die Laufbahn der Stützfläche der Mutter auf einem größeren Umfangskreis als die gegenüberliegende Laufbahn der Druckplatte liegt, wodurch bei Drehung des Handschraubteils und feststehender Druckplatte auf die Mutter eine Drehbewegung übertragen wird. Somit ist eine werkzeuglose Handbetätigung zum Befestigen eines scheibenförmigen Werkzeuges an einer Handwerkzeugmaschine bzw. Lösen möglich.

Die einwandfreie symmetrische Anordnung der genannten Flächen zueinander ist für einen einwandfreien Betrieb dieser Schnellspanneinrichtung erforderlich. Zusätzliche Dichtringe sind vorgesehen, die Eindringen von Verunreinigungen bzw. Fremdstoffen in den von den Flächen begrenzten Raum unterbinden sollen. Weiterhin muß die Druckplatte einwandfrei gegenüber der Mutter ausgerichtet und beweglich geführt sein, damit die gewünschten Abrollverhältnisse gewährleistet sind. Weiterhin ist nicht auszuschließen, daß das Handschraubteil während des Betriebs der Handwerkzeugmaschine beispielsweise gegen das zu bearbeitende Werkstück anstößt, wobei eine ungewollte Verdrehung des Handschraubteils einsetzen kann, die zu einer Entlastung der eingespannten Schleifscheibe und somit zu einem unbeabsichtigten Lösen der Schleifscheibe führt.

Aufgabe der vorliegenden Erfindung ist es daher, eine Spanneinrichtung nach den Merkmalen des Oberbegriffs des Anspruchs 1 anzugeben, bei der diese Nachteile ausgeschlossen sind.

Erfindungsgemäß wird diese Aufgabe durch die Merkmale des kennzeichnenden Teils des Anspruchs 1 gelöst. Bei zugeschaltetem Ausweichraum ist der Einspanndruck wenigstens soweit von der Schleifscheibe entfernt, daß ein Lösen der Spannmutter von Hand ohne zusätzliche Hilfswerkzeuge möglich ist. Die Spannkraft wird von dem Andruckglied über das hydraulische Druckmedium in die Spannmutter eingeleitet. Der Druck in dem hydraulischen Druckmedium ist unter der wirksamen Spannkraft erhöht gegenüber dem atmosphärischen Druck.

Die erfindungsgemäße Spanneinrichtung weist gegenüber der bekannten Spanneinrichtung erhebliche Vorteile auf. Es müssen keine Flächen bearbeitet werden, an denen Kugeln abwälzen können, es müssen keine besondere Vorkehrungen getroffen werden, um eine hochgenaue Positionierung der diese Flächen aufweisenden Teile zueinander zu gewährleisten.

Wird die erfindungsgemäße Spanneinrichtung beispielsweise bei einer Winkelschleifmaschine eingesetzt, ist die Schleifscheibe zwischen einem Gegenhalter und der erfindungsgemäßen Spanneinrichtung eingespannt. Während des Betriebs derartiger Winkelschleifmaschinen zieht sich die Spannmutter üblicherweise selbsttätig fest, so daß die Schleifscheibe fest zwischen dem Gegenhalter und dem Andruckglied der erfindungsgemäßen Spanneinrichtung eingespannt ist. Die Einspannkraft wird über das hydraulische Druckmedium in die Spannmutter eingeleitet, wobei die Spannmutter diese Einspannkraft über die Verschraubung in die Gewindespindel der Winkelschleifmaschine weiterleitet. Soll nun die Schleifscheibe entfernt werden, wird kein separates Werkzeug benötigt, um die erfindungsgemäße Spanneinrichtung von der Gewindespindel zu lösen. Es wird lediglich der Ausweichraum zu der Kammer zugeschaltet, in der das hydraulische Druckmedium unter Druck angeordnet ist. Das hydraulische Druckmedium weicht nun unter dem ihm innewohnenden Druck in den Ausweichraum aus, wobei aufgrund der Volumenvergrößerung der Kammer der Druck in dem hydraulischen Druckmedium rasch abgebaut wird. Das Andruckglied und demzufolge auch die Schleifscheibe sind nach erfolgtem Druckabbau soweit entlastet, daß ein manuelles Abschrauben der Spannmutter bzw. der erfindungsgemäßen Spanneinrichtung problemlos möglich ist.

Als hydraulisches Druckmedium kann beispielsweise Hydrauliköl oder auch ein leicht verformbarer, wenigstens annähernd inkompressibler Feststoff verwendet werden, wobei für viele Anwendungen ein Hydrauliköl vorteilhaft sein mag.

Der Ausweichraum wird vorzugsweise durch ein Verschlußglied freigegeben oder gesperrt, wobei zu diesem Zweck beispielsweise ein Schieber verwendet werden kann, der zwischen Kammer und Ausweichraum angeordnet ist, und der nach seiner Betätigung die Verbindung zwischen Kammer und Ausweichraum herstellt. Eine vorteilhafte erfindungsgemäße Weiterbildung sieht als Verschlußglied einen Triebkolben vor, der in dem Ausweichraum längsverschieblich angeordnet ist und je nach gewählter Stellung den Ausweichraum freigibt oder sperrt. Der Ausweichraum kann dann als der Raum beschrieben werden, den der Kolben während des Kolbenwegs verdrängt bzw. freigibt.

Die Kammer zur Aufnahme des hydraulischen Druckmediums kann durch geeignete Dichtungen abgedichtet sein. Eine erfindungsgemäße Weiterbildung sieht jedoch vor, daß das hydraulische Druckmedium in einer biegeweichen geschlossenen Hülle angeordnet ist, die undurchlässig für das hydraulische Druckmedium ist. Die mit dem hydraulischen Druckmedium - beispielsweise Silikonöl - gefüllte Hülle wird lediglich in die Kammer eingesetzt, so daß keine weiteren Dichteinrichtungen erforderlich sind. Die Hülle ist so beschaffen, daß sie Auslenkungen des Andruckgliedes und des Verschlußgliedes folgen kann. Die Hülle ist vorzugsweise als ringförmiger Körper ausgebildet, der auf die Welle aufgeführt werden kann.

Das Andruckglied weist vorzugsweise einen auf der Welle längsverschieblich angeordneten, insbesondere ringförmigen Lastkolben auf, der die Kammer begrenzt. Der Lastkolben kann in Richtung auf die Kammer einfahren, wenn das hydraulische Druckmedium in den Ausweichraum ausweicht. Der Lastkolben kann mit seiner einen Stirnseite beispielsweise die Schleifscheibe belasten.

Der bereits erwähnte Triebkolben des Verschlußgliedes begrenzt den Ausweichraum. Vorzugsweise sind der Lastkolben und der Triebkolben in Ausnehmungen der Spannmutter längsverschieblich angeordnet, wobei die Spannmutter mit ihren diese Ausnehmungen begrenzenden Wänden die Kammer und/oder den Ausweichraum begrenzt. Diese erfindungsgemäße Weiterbildung ist besonders platzsparend, da die Kammer zur Aufnahme des hydraulischen Druckmediums und der genannte Ausweichraum auf einfache Art und Weise in die Spannmutter integriert werden können.

Der Lastkolben und der Triebkolben weisen je eine von dem hydraulischen Druckmedium beaufschlagbare Kolbenfläche auf, wobei die Kolbenfläche des Lastkolbens größer als die Kolbenfläche des Triebkolbens ist. Je kleiner die Kolbenfläche des Triebkolbens ist, desto kleiner ist die Kraft, die von dem unter hohem Druck stehenden hydraulischen Druckmedium auf den Triebkolben einwirkt, wenn dieser den Ausweichraum sperrt. Bei der erfindungsgemäßen Spanneinrichtung ist der Ausweichraum für die Aufnahme von so viel hydraulischem Druckmedium ausgelegt, wie es nötig ist, um den Einspanndruck von der Spannscheibe wenigstens teilweise zu entfernen. Je nach Auslegung der einzelnen Komponenten kann bereits ein Verschiebeweg von ca. 3/10 mm des Andruckgliedes genügen, um die Spannscheibe für ein manuelles Lösen der Spannmutter zu entlasten. Das bedeutet, daß sich der Verschiebeweg des Triebkolbens gegenüber dem Verschiebeweg des Lastkolbens umgekehrt proportional zu dem Verhältnis der Kolbenflächen des Trieb- und des Lastkolbens zueinander verhalten.

Damit das Verschlußglied den Ausweichraum zuverlässig sperrt, ist vorzugsweise eine Halteeinrichtung vorgesehen, die den Triebkolben in der Position hält, in der der Ausweichraum gesperrt ist. Diese Halteeinrichtung kann einen Druckknopf und Sperrkörper aufweisen, wobei der Druckknopf die Sperrkörper zwischen dem Triebkolben und einem Anschlag hält. Unter der Druckkraft des hydraulischen Druckmediums wird der Triebkolben über die Sperrkörper gegen den Anschlag angedrückt und einwandfrei an dem Anschlag abgestützt. Dieser Anschlag kann beispielsweise unmittelbar an der Spannmutter ausgebildet sein, er kann aber auch durch einen abgewinkelten Bord einer Blechhülse gebildet sein, die in eine Bohrung der Spannmutter eingepreßt ist.

Die erwähnte Halteeinrichtung ist derart ausgebildet, daß der gedrückte Druckknopf einen Freiraum zur Aufnahme der Sperrkörper freigibt. Unter der auf den Triebkolben einwirkenden Druckkraft des hydraulischen Druckmediums werden die Sperrkörper in diesen Freiraum hineingedrückt, wobei nun der Triebkolben unmittelbar gegen den Anschlag gefahren wird. In dieser Situation ist der Ausweichraum vollständig freigegeben, so daß der Ausweichraum der Kammer zugeschaltet ist. Das Verlagern der Sperrkörper - die vorzugsweise durch Kugeln gebildet sind - in den Freiraum hinein wird vorzugsweise durch eine Schrägfläche unterstützt, die an dem Triebkolben stirnseitig ausgebildet ist. Wenn der Druckknopf in seiner Ausgangsstellung ist - also wenn der Druckknopf nicht gedrückt ist - sind die Sperrkörper an einer Stützfläche des Druckknopfes abgestützt. Diese Stützfläche kann beispielsweise durch die zylindrische Mantelfläche des Druckknopfes gebildet sein. Die bereits erwähnte, an dem Triebkolben vorgesehene Schrägfläche ist vorzugsweise schiefwinkelig zu dieser Stützfläche und schiefwinkelig zu dem Anschlag angeordnet. Das bedeutet, daß die Sperrkörper, vorzugsweise die Kugeln, zwischen dem Triebkolben, dem Druckknopf und dem vorzugsweise an der Spannmutter ausgebildeten Anschlag eingespannt sind. Die Stützfläche und die Anschlagfläche sind vorzugsweise rechtwinkelig zueinander angeordnet. Die Schrägfläche ist in Richtung auf den Freiraum zur Aufnahme der Sperrkörper geneigt. Der Freiraum ist vorzugsweise durch eine an dem Druckknopf ausgebildete Umfangsnut gebildet, die der Stützfläche axial benachbart ist.

Sperrt der Triebkolben den Ausweichraum, sind die vorzugsweise als Kugeln ausgebildeten Sperrkörper an der Schrägfläche des Triebkolbens, der Anschlagfläche des Anschlags und der Stützfläche des Druckknopfes abgestützt. Lage und Größe der resultierenden Kraft, die zwischen der Stützfläche und der Kugel übertragen wird, ist abhängig von der Neigung der Schrägfläche. Diese resultierende Kraft wiederum kann durch zwei rechtwinkelig aufeinander stehende Ersatzkräfte dargestellt werden, von denen die eine senkrecht zu der Stützfläche des Druckknopfes und von denen die andere senkrecht zur der Anschlagfläche des Anschlags angeordnet ist. Die Neigung der Schrägfläche legt somit fest, wie groß die an der Stützfläche angreifende Ersatzkraft vom Betrag her ist. Für ein einfaches Bedienen des Druckknopfes empfiehlt es sich, die auf die Stützfläche wirkende Ersatzkraft so klein zu halten, daß ein problemloses Drücken des Druckknopfes möglich ist. Je spitzer der Neigungswinkel zwischen der Schrägfläche und der Längsachse des Triebkolbens ist, desto größer ist die auf die Stützfläche des Druckknopfes wirkende Ersatzkraft.

Der Druckknopf wird vorzugsweise unter der Kraft einer Feder in seine Ausgangsstellung gefedert. Der Druckknopf kann in einer radial oder axial gerichteten Ausnehmung vorzugsweise der Spannmutter angeordnet sein, also radial oder axial verschiebbar sein.

### Kurze Beschreibung der Zeichnungen

Nachstehend wird die Erfindung anhand von drei in insgesamt vier Figuren dargestellten Ausführungsbeispielen näher erläutert. Es zeigen:
- Figur 1: einen Längsschnitt durch eine erfindungsgemäße Spanneinrichtung,
- Figur 2: eine Einzelheit der Spanneinrichtung gemäß Figur 1,
- Figur 3: eine weitere erfindungsgemäße Spanneinrichtung im Längshalbschnitt und
- Figur 4: eine weitere erfindungsgemäße Spanneinrichtung im Längshalbschnitt.

### Ausführliche Beschreibung der Zeichnungen

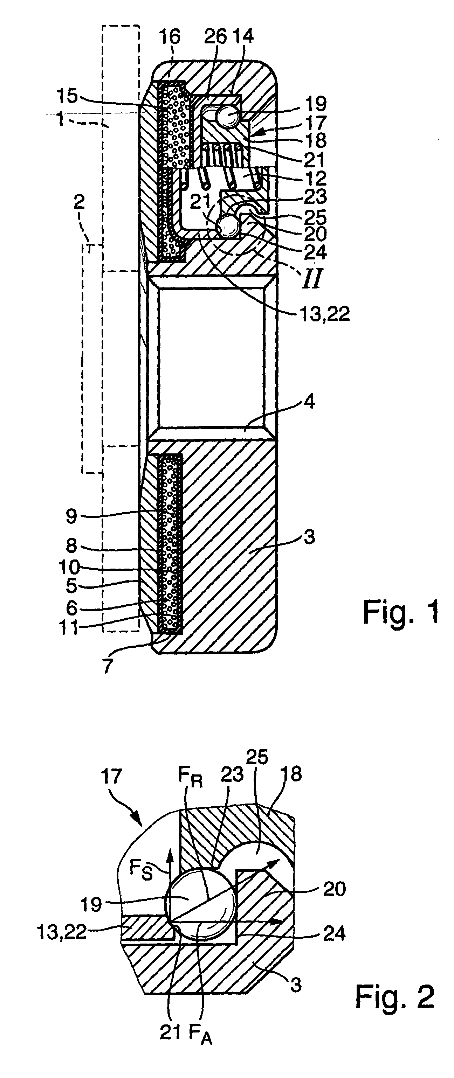

Figur 1 zeigt eine Spanneinrichtung zum lösbaren Befestigen einer lediglich angedeuteten Schleifscheibe 1 auf einer nicht dargestellten Gewindespindel einer Winkelschleifmaschine. Zu diesem Zweck ist die Schleifscheibe 1 zwischen einem nur angedeuteten Gegenhalter 2 und der erfindungsgemäßen Spanneinrichtung eingespannt.

Die erfindungsgemäße Spanneinrichtung weist eine Spannmutter 3 auf, die mit einer Gewindebohrung 4 zum Aufschrauben auf die nicht dargestellte Gewindespindel versehen ist. Zwischen der Schleifscheibe 1 und der Spannmutter 3 ist ein Lastkolben 5 angeordnet, der in einer ersten Ausnehmung 6 der Spannmutter 3 längsverschieblich angeordnet ist. Eine Zylinderfläche 7 der Spannmutter 3 begrenzt zum einen die erste Ausnehmung 6 und kann zum anderen als Führung für den Lastkolben 5 dienen. Der Lastkolben 5 liegt mit seiner der Schleifscheibe 1 zugewandten Stirnfläche an der Schleifscheibe 1 an und begrenzt mit seiner entgegengesetzten Stirnfläche 8 eine Kammer 9, die durch die Ausnehmung 6 in der Spannmutter 3 gebildet ist. In die ringförmige Kammer 9 ist eine ebenfalls ringförmig ausgebildete Hülle 10 eingesetzt, die biegeweich und undurchlässig für ein Silikonöl 11 ist, das in der Hülle 10 eingeschlossen ist.

Die Spannmutter 3 ist mit einer zweiten Ausnehmung 12 versehen, in der ein Triebkolben 13 längsverschieblich angeordnet ist. Eine Zylinderfläche 14 der Spannmutter 3 begrenzt die zweite Ausnehmung 12.

Unterhalb der Mittellinie der zweiten Ausnehmung 12 ist der Triebkolben 13 in seiner ersten Position dargestellt, in der der Ausweichraum 15 gesperrt ist. Oberhalb dieser Mittellinie ist der Triebkolben 13 in seiner zweiten Position dargestellt, in der der Ausweichraum 15 zugeschaltet ist. Der Ausweichraum 15 wird bei dieser erfindungsgemäßen Spanneinrichtung demzufolge durch das Volumen definiert, daß der Triebkolben 13 auf seinem Verschiebeweg von der ersten Position in seine zweite Position freigibt bzw. das Volumen, das der Triebkolben 13 verdrängt, wenn er aus seiner zweiten Position in die erste Position verschoben wird.

Der Figur 1 ist zu entnehmen, daß der durch die angedeutete Grenzlinie 16 begrenzte Ausweichraum 15 sowohl Teil der ersten Ausnehmung 6 als auch Teil der zweiten Ausnehmung 12 ist. Es ist jedoch ohne weiteres möglich, daß der Ausweichraum 15 ausschließlich innerhalb der ersten oder der zweiten Ausnehmung 6, 12 gebildet ist. Zu diesem Zweck würde der Triebkolben 13 mit seiner der Hülle 10 zugewandten Stirnfläche entweder ausschließlich außerhalb der zweiten Ausnehmung 12 oder ausschließlich innerhalb der zweiten Ausnehmung 12 längsverschieblich sein.

Eine Halteeinrichtung 17 ist vorgesehen, die den Triebkolben 13 in der zweiten Position hält, in der der Ausweichraum 13 gesperrt ist. Diese Halteeinrichtung 17 umfaßt einen Druckknopf 18, Kugeln 19, einen an der Spannmutter 3 ausgebildeten Anschlag 20, eine den Druckknopf 18 in seine Ausgangsstellung drückende Feder 21 und eine stimseitig an dem Triebkolben 13 vorgesehene Schrägfläche 21. Der aus Blech tassenförmig gebildete Triebkolben 13 ist am stimseitigen freien Ende des Kolbenhemdes 22 mit der Schrägfläche 21 versehen. Unter dem Druck des Silikonöls 11 wird der Triebkolben 13 in Richtung auf die Kugeln 19 gedrückt, wobei die Kugeln 19 zwischen der Schrägfläche 21, einer Stützfläche 23 und an einer Anschlagfläche 24 des Anschlags 20 eingespannt sind.

Figur 2 zeigt in vergrößerter Darstellung eine Einzelheit der Halteeinrichtung 17. Der Darstellung ist zu entnehmen, daß der Druckknopf 18 axial benachbart zu der Stützfläche 23 - die durch die zylindrische Mantelfläche des Druckknopfes 18 gebildet ist - eine Kugelrille 25 aufweist, in die die Kugeln 19 eingreifen können, wie weiter unten beschrieben wird. Der Darstellung ist ferner zu entnehmen, daß in dem Kontakt zwischen dem Triebkolben 13 mit der Kugel 19 eine resultierende Kraft F_{R} in die Kugel 19 eingeleitet wird. Diese Kraft F_{R} läßt sich in die beiden Ersatzkräfte F_{S} und F_{A} zerlegen, wobei die Kraft F_{S} eine Stützkraft ist, die senkrecht zu der Stützfläche 23 des Druckknopfes 18 ausgebildet ist. Die Kraft F_{A} ist eine Anschlagkraft, die senkrecht zu der Anschlagfläche 24 des Anschlags 20 angeordnet ist.

Eine Änderung der Neigung der Schrägfläche 21 hat eine Änderung der resultierenden Kraft F_{R} und der Stützkraft F_{S} zur Folge, während die Anschlagkraft FA konstant bleibt. Diese Kräfteaufteilung wird ermöglicht durch die ringförmige Ausbildung der Stützfläche 23, der Anschlagfläche 24 und der Schrägfläche 21.

Nachstehend wird die Wirkungsweise der erfindungsgemäßen Spanneinrichtung näher erläutert. Im Betrieb der Winkelschleifmaschine ist die Schleifscheibe 1 zwischen dem Gegenhalter 2 und der erfindungsgemäßen Spanneinrichtung eingespannt. Der Tiebkolben 13 wird mittels der Halteeinrichtung 17 in seiner ersten, also linksseitigen, Position gehalten, in der der Ausweichraum 15 gesperrt ist. Zum Entlasten der Schleifscheibe 1 wird nun der Druckknopf 18 entgegen der Federkraft der Feder 21 nach links gedrückt. Während dieser axialen Verlagerung des Druckknopfes 18 gleitet die Stützfläche 23 des Druckknopfes 18 an den Kugeln 19 vorbei, bis schließlich die Kugeln 19 und die Kugelrille 24 des Druckknopfes 18 einander gegenüberliegen. In dieser Situation werden die Kugeln 18 unter der wirksamen Stützkraft F_{S} radial nach innen verlagert, bis sie schließlich am Boden der Kugelrille 25 anliegen. Nun kann das Kolbenhemd 22 des Triebkolbens 13 zwischen den Kugeln 19 und der Wandung 26 der zweiten Ausnehmung 12 unter der Druckkraft des Silikonöls 11 nach rechts in Richtung auf die Anschlagfläche 24 des Anschlags 20 gedrückt werden. Diese axiale Verlagerung des Triebkolbens 13 ist abgeschlossen, wenn der Triebkolben 13 mit seinem einen stimseitigen Ende gegen die Anschlagfläche 24 anschlägt. In dieser Situation ist der Ausweichraum 15 vollständig freigegeben. Das bedeutet, daß das Volumen der Kammer 9 durch das Zuschalten des Ausweichraums 15 vergrößert ist, wobei die Hülle 10 in den Ausweichraum 15 drängt, so daß der Druck im Silikonöl 11 rasch abgebaut wird. Der Druckabbau hat zur Folge, daß der Lastkolben 5 eine wenn auch nur geringfügige axiale Bewegung weg von der Schleifscheibe 1 durchführt. Diese axiale Verlagerung genügt, um den Einspanndruck wenigstens so weit von der Schleifscheibe 1 zu nehmen, daß die Spannmutter 3 von Hand problemlos vollständig von der Triebspindel abgeschraubt werden kann, ohne daß ein separates Werkzeug erforderlich wäre.

Wenn die Kammer 9 drucklos ist, also wenn der Druck im Silikonöl 11 dem athmosphärischen Druck entspricht, kann der Vorgang zum Rückstellen des Druckknopfes 18 in seine Ausgangsstellung wie folgt beschrieben werden. Nach Entfernen der manuell aufgebrachten Druckkraft auf den Druckknopf 18 übt die komprimierte Feder 21 eine axiale Druckkraft auf den Triebkolben 13 und auf den Druckknopf 18 aus. Unter dieser Druckkraft wird nun zunächst der Triebkolben 13 nach links in Richtung auf die Kammer 9 soweit verlagert, bis das Kolbenhemd 22 an den Kugeln 19 vorbeigeschoben ist. Die Kugeln 19 sind nun lediglich zwischen der Kugelrille 25 und der Anschlagfläche 24 eingespannt. Da eine radiale Stützkraft fehlt, besteht kein Kräftegleichgewicht. Die Feder 21 ist noch nicht entlastet und übt weiterhin eine axiale Druckkraft auf den Druckknopf 18 aus. Unter dieser Druckkraft werden nun die Kugeln 19 aus ihren Kugelrillen 25 radial herausgedrückt, bis sie schließlich zur Anlage an die Schrägfläche 21 des Triebkolbens 13, der Anschlagfläche 24 des Anschlags und der Stützfläche 23 des Druckknopfes 18 gelangt. In dieser Situation ist der Triebkolben 13 in seiner ersten Position angeordnet, in der der Ausweichraum 15 gesperrt ist. Die erfindungsgemäße Spanneinrichtung kann zum erneuten Spannen eingesetzt werden.

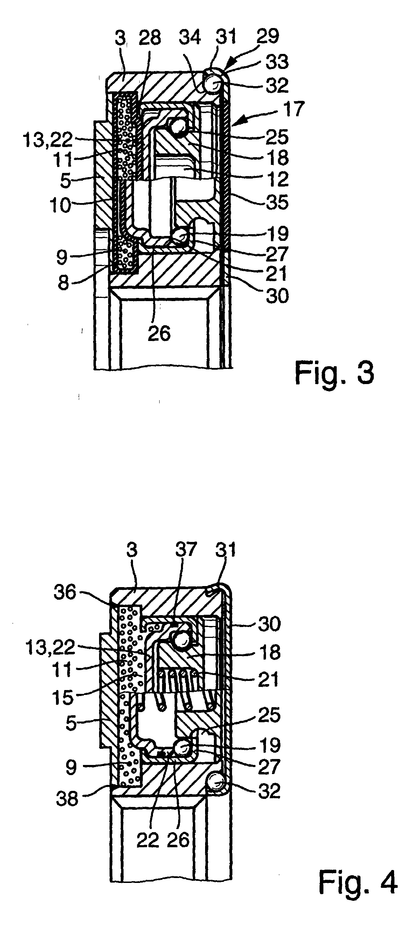

Die erfindungsgemäße Spanneinrichtung nach Figur 3 unterscheidet sich von der aus den Figuren 1 und 2 im wesentlichen dadurch, daß in die zweite Ausnehmung 12 eine Blechhülse 26 eingepreßt ist, deren nach radial innen abgewinkelter Bord 27 den Anschlag für die Kugeln 19 bildet. An ihrer von dem Bord 27 abgewandten Stimseite ist die Blechhülse 26 mit einem weiteren, nach radial innen gezogenen Bord 28 versehen, der als Anschlag für den Triebkolben 13 vorgesehen ist. Die Halteeinrichtung 17 ist eine Baueinheit, die im wesentlichen aus der Blechhülse 26, dem Druckknopf 18, dem Triebkolben 13, und den Kugeln 19 gebildet ist Diese Baueinheit kann in die zweite Ausnehmung 12 problemlos eingepreßt werden.

Ein weiterer Unterschied zu der erfindungsgemäßen Spanneinrichtung nach den Figuren 1 und 2 besteht darin, daß die Spannmutter 3 an ihrer von dem Lastkolben 5 abgewandten Stimseite mit einem Anlaufschutz 29 versehen ist Dieser Anlaufschutz 29 weist eine Deckscheibe 30 auf, die an ihrem Außenumfang mit einem Axialbord 31 versehen ist. Die Deckscheibe 30 ist mit ihrem Axialbord 31 auf einen Kugelkranz 32 aufgeschnappt, wobei die Kugeln des Kugelkranzes 32 an Kugelrillen 33, 34 der Spannmutter 3 und der Deckscheibe 30 abwälzen. Stößt die Spannmutter während des Betriebs der Winkelschleifmaschine mit der Deckscheibe 30 beispielsweise gegen das zu bearbeitende Werkstück, wird die Deckscheibe 30 abgebremst, wobei die Spannmutter 3 weiter rotiert, während die Kugeln des Kugelkranzes 32 an ihren Kugelrillen 33, 34 abwälzen. Die Deckscheibe 30 weist eine Bohrung auf, in die ein biegeweiches Einsatzstück 35 eingesetzt, bzw. einvulkanisiert ist. Zum Betätigen des Druckknopfes 18 wird die Deckscheibe 30 soweit gedreht, bis das Einsatzstück 35 dem Druckknopf 18 einwandfrei gegenüberliegt. Unter einer Druckbelastung des Einsatzstückes 35 von außen weicht dieses zum Betätigen des Druckknopfes 18 aus.

Die erfindungsgemäße Spanneinrichtung nach Figur 4 unterscheidet sich von der aus der Figur 3 im wesentlichen dadurch, daß der Kugelkranz zum Lagern der Deckscheibe 30 am Innenumfang der ringförmig ausgebildeten Deckscheibe vorgesehen ist. Ein weiterer Unterschied besteht darin, daß die ringförmig geschlossene Hülle 10 zur Aufnahme des Silikonöls 11 entfallen ist. Dichtringe 36, 37, 38 sind statt dessen vorgesehen, um sicherzustellen, daß das Silikonöl 11 die Kammer 9 bzw. den Ausweichraum 15 nicht verläßt Die Dichtringe 36, 38 sind zwischen den Lastkolben 5 und die Spannmutter 3 eingesetzt und der andere Dichtring 37 ist zwischen die Blechhülse 26 und das Kolbenhemd 22 eingesetzt.

### Bezugszeichen

- 1: Schleifscheibe
- 2: Gegenhalter
- 3: Spannmutter
- 4: Gewindebohrung
- 5: Lastkolben
- 6: erste Ausnehmung
- 7: Zylinderfläche
- 8: Stirnfläche
- 9: Kammer
- 10: Hülle
- 11: Silikonöl
- 12: zweite Ausnehmung
- 13: Triebkolben
- 14: Zylinderfläche
- 15: Ausweichraum
- 16: Grenzlinie
- 17: Halteeinrichtung
- 18: Druckknopf
- 19: Kugel
- 20: Anschlag
- 21: Schrägfläche
- 22: Kolbenhemd
- 23: Stützfläche
- 24: Anschlagfläche
- 25: Kugelrille
- 26: Blechhülse
- 27: Bord
- 28: Bord
- 29: Anlaufschutz
- 30: Deckscheibe
- 31: Axialbord
- 32: Kugelkranz
- 33: Kugelrille
- 34: Kugelrille
- 35: Einsatzstück
- 36: Dichtring
- 37: Dichtring
- 38: Dichtring

## Patentansprüche

1. Spanneinrichtung zum lösbaren Befestigen eines Teils (1) auf einer Welle, wobei eine auf die Welle aufschraubbare Spannmutter (3) zum Einspannen des Teils vorgesehen ist, wobei zwischen einem Andruckglied (5) zur Anlage an das Teil und der Spannmutter (3) eine Kammer (9) vorgesehen ist, die ein hydraulisches Druckmedium (11) enthält, wobei ein der Kammer (9) zuschaltbarer Ausweichraum (15) für das hydraulische Druckmedium (11) vorgesehen ist, **dadurch gekennzeichnet, dass** das hydraulische Druckmedium (11) in einer biegeweichen, geschlossenen Hülle (10) angeordnet ist, die undurchlässig für das hydraulische Druckmedium (11) ist, und die in den Ausweichraum (15) hinein drängbar ist.

2. Spanneinrichtung nach Anspruch 1, bei der ein Verschlussglied (13, 17) vorgesehen ist, in dessen erster Position der Ausweichraum (15) gesperrt ist, und in dessen zweiter Position der Ausweichraum (15) zugeschaltet ist.

3. Spanneinrichtung nach Anspruch 1, bei der ein scheibenförmiges Werkzeug, insbesondere Schleifscheibe (1), auf einer Gewindespindel einer Handwerkzeugmaschine angeordnet ist.

4. Spanneinrichtung nach Anspruch 2, bei der die Hülle (10) Auslenkungen des Andruckgliedes (5) und des Verschlussgliedes (13, 17) folgt.

5. Spanneinrichtung nach Anspruch 1, bei der die Spannmutter (3) den Ausweichraum (15) und die Kammer (9) begrenzt.

6. Spanneinrichtung nach Anspruch 1, bei der das Andruckglied einen auf der Welle längsverschieblich angeordneten, insbesondere ringförmigen Lastkolben (5) aufweist, der die Kammer (9) begrenzt.

7. Spanneinrichtung nach Anspruch 2, bei der das Verschlussglied einen längsverschieblich angeordneten Triebkolben (13) aufweist, der den Ausweichraum (15) begrenzt.

8. Spanneinrichtung nach den Ansprüchen 6 und 7, bei der eine erste Kolbenfläche (8) des Lastkolbens (5) größer als eine zweite Kolbenfläche des Triebkolbens (13) ist.

9. Spanneinrichtung nach Anspruch 6, bei der der Lastkolben (5) in einer ersten Ausnehmung (6) der Spannmutter (3) angeordnet ist, wobei die Spannmutter (3) und der Lastkolben (5) die Kammer (9) begrenzen.

10. Spanneinrichtung nach Anspruch 7, bei der der Triebkolben (13) in einer zweiten Ausnehmung (12) der Spannmutter (3) angeordnet ist, wobei die Spannmutter (3) und der Triebkolben (13) den Ausweichraum (15) begrenzen.

11. Spanneinrichtung nach Anspruch 7, bei der das Verschlussglied eine lösbare Halteeinrichtung (17) aufweist, die den Triebkolben (13) in der zweiten Position hält, in der der Ausweichraum (15) gesperrt ist.

12. Spanneinrichtung nach Anspruch 11, bei der die Halteeinrichtung (17) einen Druckknopf (18) und Sperrkörper (19) aufweist, wobei der Druckknopf (18) die Sperrkörper (19) zwischen dem Triebkolben (13) und einem Anschlag (20) hält.

13. Spanneinrichtung nach Anspruch 12, bei der der Anschlag (20, 27) an der Spannmutter (3) befestigt ist.

14. Spanneinrichtung nach Anspruch 12, bei der der gedrückte Druckknopf (18) einen Freiraum (25) zur Aufnahme der Sperrkörper (19) freigibt.

15. Spanneinrichtung nach Anspruch 12, bei der der Triebkolben (13) stimseitig mit einer zu seiner Längsachse geneigt angeordneten Schrägfläche (21) zur Antage an die Sperrkörper (19) versehen ist.

16. Spanneinrichtung nach Anspruch 12, bei der der Druckknopf (18) eine Stützfläche (23) für die Sperrkörper (19) aufweist, an denen die Sperrkörper (19) in der Ausgangsstellung des Druckknopfes (18) abgestützt sind.

17. Spanneinrichtung nach den Ansprüchen 15 und 16, bei der die Schrägfläche (21) schiefwinklig zu dem Anschlag (20, 27) und zu der Stützfläche (23) angeordnet ist.

18. Spanneinrichtung nach Anspruch 12, bei der der Druckknopf (18) mittels einer Feder (21) in seine Ausgangsstellung hineingefedert ist.

## Claims

1. Clamping device for the releasable fastening of a part (1) on a shaft, a clamping nut (3) that can be screwed onto the shaft being provided for clamping the part in place, a chamber (9) being arranged between a pressure member (5), intended for bearing against the part, and the clamping nut (3), said chamber (9) containing a hydraulic pressure medium (11), and an escape space (15) that can be connected to the chamber (9) being provided for the hydraulic pressure medium (11), **characterised in that** the hydraulic pressure medium (11) is arranged in a flexible, dosed envelope (10) that is impermeable to the hydraulic pressure medium (11) and can be displaced into the escape space (15).

2. Clamping device according to claim 1, wherein a closure member (13, 17) is provided, in a first position of which the escape space (15) is blocked, and in a second position of which the escape space (15) is connected.

3. Clamping device according to claim 1, wherein a disk-shaped tool, in particular a grinding wheel (1), is arranged on a threaded spindle of a hand machine tool.

4. Clamping device according to claim 2, wherein the envelope (10) follows deflections of the pressure member (5) and of the closure member (13, 17).

5. Clamping device according to claim 1, wherein the clamping nut (3) defines the escape space (15) and the chamber (9).

6. Clamping device according to claim 1, wherein the pressure member comprises a load piston (5), in particular of annular shape, that is arranged for longitudinal displacement on the shaft and defines the chamber (9).

7. Clamping device according to claim 2, wherein the closure member comprises a driving piston (13) that is arranged for longitudinal displacement and defines the escape space (15).

8. Clamping device according to claims 6 and 7, wherein a first piston area (8) of the load piston (5) is larger than a second piston area of the driving piston (13).

9. Clamping device according to claim 6, wherein the load piston (5) is arranged in a first recess (6) of the damping nut (3), and the damping nut (3) and the load piston (5) define the chamber (9).

10. Clamping device according to claim 7, wherein the driving piston (13) is arranged in a second recess (12) of the clamping nut (3), and the clamping nut (3) and the driving piston (13) define the escape space (15).

11. Clamping device according to claim 7, wherein the closure member comprises a releasable holding device (17) which holds the driving piston (13) in the second position, in which the escape space (15) is blocked.

12. Clamping device according to claim 11, wherein the holding device (17) comprises a pushbutton (18) and locking bodies (19), and the pushbutton (18) holds the locking bodies (19) between the driving piston (13) and a stop (20).

13. Clamping device according to claim 12, wherein the stop (20, 27)) is fixed on the clamping nut (3).

14. Clamping device according to claim 12, wherein the depressed pushbutton (18) opens an empty space (25) for receiving the locking bodies (19).

15. Clamping device according to claim 12, wherein the driving piston (13) is provided at one front end with an inclined surface (21) that is inclined relative to the longitudinal axis of the driving piston (13) and is intended for bearing against the locking bodies (19).

16. Clamping device according to claim 12, wherein the pushbutton (18) comprises a supporting surface (23) for the locking bodies (19), on which supporting surface (23) the locking bodies (19) are supported in the initial position of the pushbutton (18).

17. Clamping device according to claims 16 and 17, wherein the inclined surface (21) is arranged at an oblique angle to the stop (20, 27) and to the supporting surface (23).

18. Clamping device according to claim 12, wherein the pushbutton (18) is moved into its initial position under spring deflection by means of a spring (21).

## Revendications

1. Dispositif de serrage pour la fixation d'une pièce (1) de manière débrayable sur un arbre, un écrou de serrage (3), qui peut être vissé sur l'arbre, étant prévu pour encastrer la pièce, une chambre (9) qui contient un milieu hydraulique sous pression (11) étant prévue entre un membre de pression (5), qui doit s'appuyer contre la pièce, et l'écrou de serrage (3), et un espace d'évitement (15) qui peut être relié à la chambre (9) étant prévu pour le milieu hydraulique sous pression (11), **caractérisé en ce que** le milieu hydraulique sous pression (11) est agencé dans une enveloppe (10) flexible et fermée qui est imperméable au milieu hydraulique sous pression (11) et qui peut être déplacée dans l'espace d'évitement (15).

2. Dispositif de serrage selon la revendication 1, dans lequel un membre de fermeture (13, 17) est prévu, dans la première position duquel l'espace d'évitement (15) est bloqué, et dans la seconde position duquel l'espace d'évitement (15) est relié.

3. Dispositif de serrage selon la revendication 1, dans lequel un outil en forme de disque, plus particulièrement une meule (1), est agencé sur une broche filetée d'une machine-outil à main.

4. Dispositif de serrage selon la revendication 2, dans lequel l'enveloppe (10) suit des déplacements du membre de pression (5) et du membre de fermeture (13, 17).

5. Dispositif de serrage selon la revendication 1, dans lequel l'écrou de serrage (3) délimite l'espace d'évitement (15) et la chambre (9).

6. Dispositif de serrage selon la revendication 1, dans lequel le membre de pression comprend un piston de charge (5), en particulier de forme annulaire, qui est agencé en déplacement longitudinal sur l'arbre et qui délimite la chambre (9).

7. Dispositif de serrage selon la revendication 2, dans lequel le membre de fermeture comprend un piston moteur (13) qui est agencé en déplacement longitudinal et qui délimite l'espace d'évitement (15).

8. Dispositif de serrage selon les revendications 6 et 7, dans lequel une première surface de piston (8) du piston de charge (5) est plus grande qu'une seconde surface de piston du piston moteur (13).

9. Dispositif de serrage selon la revendication 6, dans lequel le piston de charge (5) est agencé dans un premier évidement (6) de l'écrou de serrage (3), et l'écrou de serrage (3) et le piston de charge (5) délimitent la chambre (9).

10. Dispositif de serrage selon la revendication 7, dans lequel le piston moteur (13) est agencé dans un second évidement (12) de l'écrou de serrage (3), et l'écrou de serrage (3) et le piston moteur (13) délimitent l'espace d'évitement (15).

11. Dispositif de serrage selon la revendication 7, dans lequel le membre de fermeture comprend un dispositif débrayable de retenue (17) qui retient le piston moteur (13) dans la seconde position dans laquelle l'espace d'évitement (15) est bloqué.

12. Dispositif de serrage selon la revendication 11, dans lequel le dispositif de retenue (17) comprend un bouton-poussoir (18) et des corps de blocage (19), et le bouton-poussoir (18) retient les corps de blocage (19) entre le piston moteur (13) et un arrêt (20).

13. Dispositif de serrage selon la revendication 12, dans lequel l'arrêt (20, 27) est fixé sur l'écrou de serrage (3).

14. Dispositif de serrage selon la revendication 12, dans lequel le bouton-poussoir (18) débloque, en position d'enfoncement, un espace libre (25) pour recevoir les corps de blocage (19).

15. Dispositif de serrage selon la revendication 12, dans lequel le piston moteur (13) est muni à un côté frontal d'une surface en biais (21) qui est inclinée par rapport à l'axe longitudinal du piston moteur (13) et qui est destinée à s'appuyer contre les corps de blocage (19).

16. Dispositif de serrage selon la revendication 12, dans lequel le bouton-poussoir (18) comprend une surface de support (23) pour les corps de blocage (19), sur laquelle surface les corps de blocage (19) sont supportés dans la position de départ du bouton-poussoir (18).

17. Dispositif de serrage selon les revendications 15 et 16, dans lequel la surface en biais (21) est agencée à angle oblique par rapport à l'arrêt (20, 27) et par rapport à la surface de support (23).

18. Dispositif de serrage selon la revendication 12, dans lequel le bouton-poussoir (18) est mû dans sa position de départ par retour élastique au moyen d'un ressort (21).
